# EUROPEAN PATENT SPECIFICATION

(11) **EP 2 872 791 B1**
(45) Date of publication and mention of the grant of the patent: **27.06.2018**
(21) Application number: 12793446.1
(22) Date of filing: 11.07.2012
(51) Int. Cl.: F16D 65/14, B60T 13/38, B60T 17/08

(54) **INTERNAL BREATHER VALVE FOR SPRING BRAKE ACTUATORS**
INNERES ENTLÜFTUNGSVENTIL FÜR FEDERBREMSAKTUATOREN
SOUPAPE D'AÉRATION INTERNE POUR DES CYLINDRES DE FREINS À RESSORTS

(43) Date of publication of application: 20.05.2015
(73) Proprietor: Wabco India Limited, Chennai 600058 (IN)
(72) Inventor: SELVAMANI SUNDARAMAHALINGAM, Chennai 600058 (IN); SREENIVASAN NARAYANAN, Chennai 600058 (IN); NAGARAJAN KUPPUREDDIPATTI PONNUSAMY, Chennai 600058 (IN); KUMAR ARANGARASAN SENTHIL, Chennai 600058 (IN)
(74) Representative: Eisenführ Speiser
(86) International application number: PCT/IN2012/000492
(87) International publication number: WO 2012/164587

(56) References cited:
- EP-A1- 0 279 930
- WO-A2-2009/075658
- WO-A2-2009/085024
- CN-U- 202 091 411
- CN-U- 202 100 636
- CN-U- 202 132 420
- CN-U- 202 149 164
- CN-U- 202 228 568
- DE-A1- 10 110 843
- GB-A- 1 237 641
- GB-A- 2 418 237
- KR-A- 20120 029 920
- KR-A- 20120 029 924

## Description

This invention relates to an internal breather device and breather valve for a spring brake actuator used in the air brake system of a motor vehicle.
The spring brake actuator is a combination of a diaphragm chamber for applying service brake and spring chamber for applying spring brake/parking brake.
The spring brake actuator is used in the brake system for converting air pressure into mechanical force. Also it is used for generating mechanical force with the help of expansion of a power spring. It actuates a slack adjuster. Thereby, braking force is generated. The braking force is used to decelerate / stop the vehicle. A prior art internal breather valve for a spring brake actuator used in the air brake system of a motor vehicle is known from EP0279930A. Reference is made to fig. 1 for details, which shows a prior art brake actuator of the aforementioned type.
In the known design of a spring brake actuator, the non-pressure side of the service brake cylinder is connected to the atmosphere through drain holes in a non-pressure plate. There is a possibility of dust ingress and mud water entry to the non-pressure side, i.e. the spring chamber of the service brake cylinder, through the drain holes.
During spring brake application, atmospheric air flows from the non-pressure side to the spring side of spring brake cylinder due to vacuum creation in the spring side. Thus any dust ingress and mud water can enter to the spring side (i.e. the spring chamber) of the spring brake cylinder.
The above mentioned drawbacks result in the following problems:
1. Seal leakage,
2. Ram assembly getting stuck (free movement is affected), and
3. Corrosion of Power spring.

This is where the invention comes in, the object of which is to provide an internal breathing thereof and an internal breather device of the aforementioned type, which limits seal leakage, and shows free movement of ram assembly and prevents or limits corrosion of the power spring. The invention is based upon the finding that the dust and mud water entry to the spring chamber of the spring brake cylinder are to be avoided to overcome the above problems.
This invention eliminates or, at any rate, minimizes the foregoing disadvantages. In particular, it achieves this by providing a breather valve according to claim 1, an internal breather device according to claim 13 and a spring brake according to claim 14. The terms "service chamber" and "pressure chamber of the service brake cylinder" are herein used as synonyms. Similarly, the terms "spring room" and "spring side of the spring chamber" and "spring chamber of the spring brake cylinder" are used as synonyms.
In particular, the invention suggests an internal breather valve for a spring brake actuator used in the air brake system of a motor vehicle, said breather valve being fitted to the stem portion of the ram assembly of the actuator, and comprising a normally open vented diaphragm for sealing the valve and blocking the air passage from a pressure chamber of a service brake cylinder to a spring chamber of a spring brake cylinder, the spring chamber being connected to the service port of the service brake assembly such that during application of the spring brake, a ram assembly moves outwards and atmospheric air from the service port flows through the internal breather valve to the spring chamber and causes any vacuum formed to collapse; and such that during release of the spring brake, pressurized air flows from the spring chamber to the service port through the internal breather valve, thus avoiding pressure build up inside the spring chamber, the simultaneous application of spring brake and service brake, however, causing the air pressure applied to the service brake to enter the breather assembly, enabling the diaphragm to seal the valve and thus block the air passage from the pressure chamber of the service brake cylinder to the spring chamber comprising a main body adapted to fit into the end portion of a stem of the spring brake actuator, a fluid channel formed in and extending through the main body, a valve seat formed in the main body and communicating with the fluid channel, a vented diaphragm which is movably mounted inside the main body and adapted to sealingly engage the valve seat, and an elastically deformable member linking the diaphragm and the main body such that the vented diaphragm is held in a normally-open position.
A particular advantage of the internal breathing valve according to the invention is seen in that the vented diaphragm is adapted to allow passage of a limited amount of fluid, i.e. a limited mass flow rate, e.g. by way of providing one or more venting holes with limited diameter. When the air pressure on one side of the vented diaphragm, in particular on the side of the vented diaphragm facing away from the valve seat, or, in a mounted situation on the side of a pressure chamber of the service cylinder, is sufficiently high such that it exceeds a predetermined value, not all the fluid can instantly pass through the vented diaphragm, leading to a force moving the diaphragm against the elastically deformable member. The rigidity of the elastically deformable member is advantageously matched to the transmissibility of fluid through the vented diaphragm, e.g. the size of the one or more venting holes in the vented diaphragm, such that the vented diaphragm is held in the open position as long as the fluid pressure downstream of the valve is approximately at atmospheric pressure or lower. Under "downstream", the side of the vented diaphragm facing away from the valve seat is meant. Consequently, the orientation "upstream" of the valve is understood as the side of the vented diaphragm facing the valve seat.
The aforementioned combination of venting hole, diameter and rigidity of the elastically deformable member has the effect that breathing operation can be carried out reliably during actuation and release of the spring brake cylinder, whereas blocking of the breathing valve can be achieved when actuating the service brake cylinder with sufficiently high pressure.
The proposed internal breather prevents dust and mud water entry into the spring side of the spring brake actuator and increases the life of the product. It prevents the seal leakage, corrosion of spring and thereby prevents the possibility of breakage of ram assembly

The proposed internal breather valve is compact and cost effective and can be easily fitted to the stem of existing ram assembly. Lesser number of parts improves the reliability.
Since the breather is inside the unit, the reliability of the assembly is improved.
Various other features of the internal breather proposed herein will be apparent from the following further description thereof given hereunder.
These aspects of the invention and further developments thereof are further outlined in the dependent claims. Thereby the mentioned advantages of the proposed concept are even more improved.

In the valve according to the invention, the vented diaphragm comprises one or a plurality of venting holes which are connected to the fluid channel provided in the main body when the vented diaphragm is in the open position.
Preferably, a diameter of the venting hole or venting holes and the rigidity of the elastically deformable member are adapted with respect to each other such that the vented diaphragm is held in the open position as long as the fluid pressure on a side of the vented diaphragm facing away from the valve seat is approximately equal to atmospheric pressure or lower. The pressure on the opposing side - which is the side of the vented diaphragm facing the valve seat, is substantially equal thereto due to the open position of the vented diaphragm.
It is particularly preferred that the diameter of the venting hole or venting holes and the rigidity of the elastically deformable member are adapted with respect to each other such that the vented diaphragm is moved into a closed position, sealing the valve seat, when the fluid pressure on the side of the vented diaphragm facing away from the valve seat reaches or exceeds a predetermined positive pressure. Hereby, pressure above atmospheric pressure is meant. Provided that the increase in pressure is brought about suddenly for instance within a split second, there is no time for pressure compensation to take place. As a consequence, the diaphragm will be moved in response to the one-sided pressure increase.

According to a further preferred embodiment, the value of the predetermined positive pressure lies in the range of 1.3 bar or higher, preferably 1.5 bar or higher.

The fluid channel advantageously comprises at least one first fluid passage on the side of the vented diaphragm facing the valve seat, and at least one, preferably two or more, second fluid passages on the side of the vented diaphragm facing away from the valve seat.

In a further preferred embodiment, the at least one second fluid passage is oriented substantially radially, and the at least one first fluid passage preferably is oriented axially, each with respect to a rotationally symmetrical axis of the main body.

Preferably, the fluid channel comprises a tapered section adapted to deflecting fluid passing from the first fluid passage towards the second fluid passage and vice versa.

Further, it is preferred if the tapered section comprises a cavity having a conical wall, and wherein the at least one second fluid passage leads into said cavity.

Still further, it is preferred if the at least one second fluid passage opens out to an outer radial surface of the main body.

The radial outer surface of the main body preferably comprises two or more annular grooves which are axially spaced apart on both axial sides of the at least one second fluid passage. The grooves are preferably adapted to hold a sealing element, for instance an O-Ring.

According to a further preferred embodiment of the invention, the elastically deformable member of the valve is a spring being located in a recess of the main body and acting to axially displace the vented diaphragm away from the valve seat.

Preferentially, the main body comprises a, preferably male, threaded section adapted to mating with a corresponding, preferably female, threaded section of the stem of the spring brake actuator.

The above-mentioned problems are solved by the invention by suggesting an internal breather device according to claim 15. In particular, the invention suggests an internal breather device for a spring brake actuator used in the air brake system of a motor vehicle,
comprising a valve being fitted to the stem portion of a ram assembly of the actuator, a normally open vented diaphragm for sealing the valve and blocking the air passage from a pressure chamber of a service brake cylinder to a spring chamber of a spring brake cylinder, the spring chamber being connected to the service port of the service brake assembly such that during application of the spring brake, a ram assembly moves outwards and atmospheric air from the service port flows through the internal breather valve to the spring chamber and causes any vacuum formed to collapse; and such that
during release of the spring brake, pressurized air flows from the spring chamber to the service port through the internal breather valve, thus avoiding pressure build up inside the spring chamber,
the simultaneous application of spring brake and service brake, however, causing the air pressure applied to the service brake to enter the breather assembly, enabling the diaphragm to seal the valve and thus block the air passage from the pressure chamber of the service brake cylinder to the spring chamber.

Additionally, the invention also solves the underlying problem by suggesting a breather device for an air brake system of a motor vehicle according to claim 16. In particular, the invention suggests a breather device for an air brake system of a motor vehicle, comprising a spring brake cylinder and a service brake cylinder combined therewith, wherein the spring brake cylinder comprises a spring brake actuator, said actuator comprising a ram assembly movable by a spring accommodated in a spring chamber and by pressurization of a pressure chamber; the service brake cylinder comprises an actuator movable by pressurization of a pressure chamber;, and a service port for supply and withdrawal of process fluid into the pressure chamber, the ram assembly of the spring brake actuator comprises a stem portion which communicates with the service brake actuator; wherein a breather valve according to one of the preferred embodiments described hereinabove is fitted into the stem portion of the ram assembly.

These aspects of the invention and further developments thereof are further outlined in the dependent claims. Thereby, the mentioned advantages of the proposed consent are even more improved.

In a preferred embodiment, the ram assembly divides the spring brake cylinder into a pressure chamber and a spring chamber accommodating the spring.

The stem portion preferentially extends through a through-hole in a wall which separates the pressure chamber of the spring brake cylinder from the pressure chamber of the service brake cylinder, and extends in the direction of the pressure chamber of the service brake cylinder.

The service brake actuator is in a preferred embodiment movable by a spring accommodated in a spring chamber of the service brake cylinder.

It is further preferred if the breather valve is a first valve, and the device further comprises a second valve, said second valve being a check valve adapted to allow passage of fluid from the breather valve into the pressure chamber of the service brake cylinder.

The second valve in particular is a radial lip seal and adapted to sealingly close the fluid channel of the breather valve against fluid passage from the pressure chamber of the service brake cylinder towards the spring chamber when the stem portion is in a released position. Under "released position", such position of the stem portion of the ram assembly is meant, where the stem portion is retracted to the inward position in the spring brake cylinder. In other terms, the stem portion is in its released position when the spring is compressed, the pressure chamber of the spring brake cylinder is pressurized and the brake is not being actuated.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

In particular, it is shown in:
- Figures 1 to 6: cross-sectional views of a known brake cylinder assembly,
- Figure. 7: a cross-sectional view of a brake cylinder assembly comprising a breather device according to the invention,
- Figure 8: a cross-sectional view of the breather device according to the invention,
- Figure 9a: the assembly of figure 7 in a further operating position,
- Figure 9b: the breather device of figure 8 in a further operating position,
- Figure 10a: the assembly of figures 7 and 9a in a further operating position, and
- Figure 10b: the breather device of figures 8 and 9b in a further operating position.

### Operational conditions of the spring brake actuator:

1. Normal condition - neither the service brake nor the spring brake is applied
2. Service brake applied condition
3. Spring brake applied condition
4. Both spring brake and service brake applied condition

### Normal Condition:

During vehicle operation, air pressure is applied to a pressure chamber of the spring brake cylinder such that the spring is kept in the compressed condition and the spring brake is in the released condition. The service brake is in the released condition as long as there is no air pressure applied to a pressure chamber of the service brake cylinder.

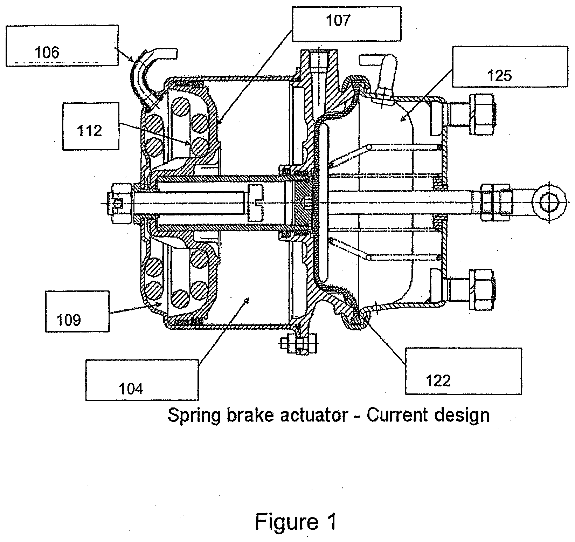

Reference is made to Figure 1 for details.

### Service brake applied condition:

Air pressure is supplied to the pressure chamber of the service brake cylinder such that the diaphragm flexes. Air pressure is converted into mechanical force and the service brake is applied.

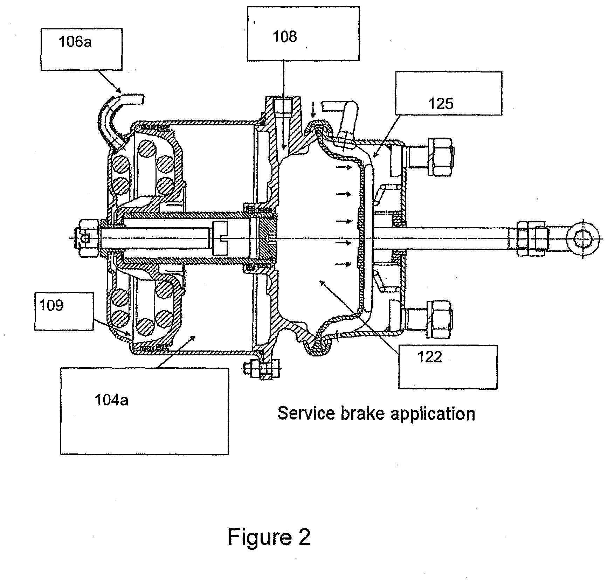

Reference is made to Figure 2 for details.

### Spring brake application:

Air pressure in the pressure chamber of the spring brake cylinder is exhausted through the hand brake valve. The spring expands and the ram assembly moves. The spring brake is applied due to the spring force.

Due to volume increase at the spring side (i.e. in the spring chamber) of the spring brake cylinder, there is a possibility of creation of vacuum pressure. Atmospheric air (i.e. breathing air) flows from the non-pressure side (i.e. spring chamber) of the service brake cylinder to the spring side through an external breather tube and thus creation of vacuum pressure is avoided.

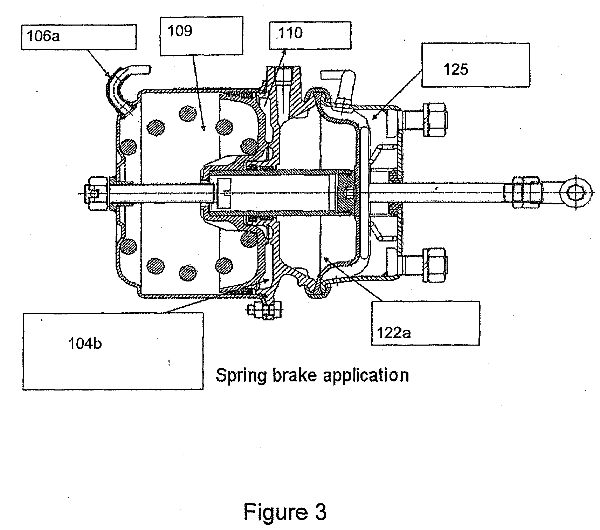

Reference is made to Figure 3 for details.

### Spring brake release:

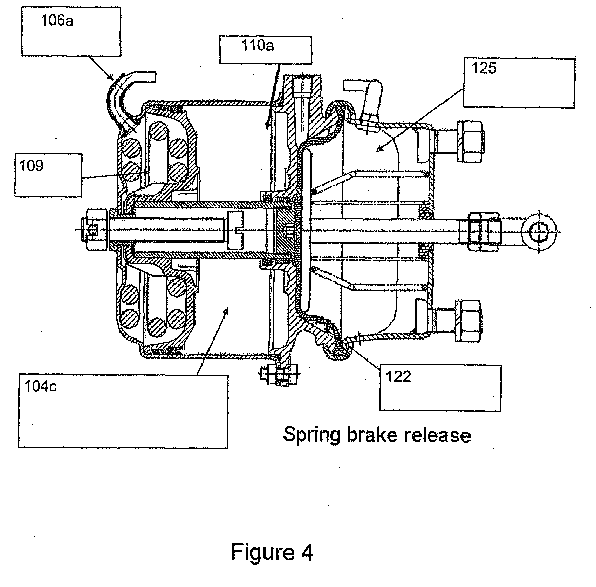

Air pressure is applied to the pressure chamber of the spring brake cylinderbrake through the hand brake valve. The ram assembly moves such that the spring is compressed. Thus, the spring brake is released. There will be a reduction of volume at the spring side (i.e. in the spring chamber of the spring brake cylinder) and hence there is a possibility of pressure build-up at the spring side. Air flows from the spring side to the non-pressure side of the service brake cylinder through the external breather tube. Reference is made to Figure 4 for details.

In the known design of a spring brake actuator, the non-pressure side of the service brake cylinder is connected to the atmosphere through drain holes in a non-pressure plate. There is a possibility of dust ingress and mud water entry to the non-pressure side, i.e. the spring chamber of the service brake cylinder, through the drain holes. During spring brake application, atmospheric air flows from the non-pressure side to the spring side of spring brake cylinder due to vacuum creation in the spring side. Thus any dust ingress and mud water can enter to the spring side (i.e. the spring chamber) of the spring brake cylinder.

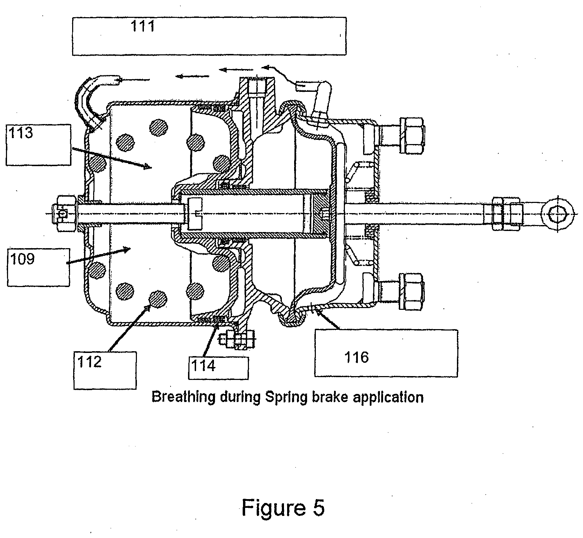

Reference is made to figure 5 for details.

### Both spring brake and service brake combined application:

Air pressure in the pressure chamber of the spring brake cylinder is exhausted through the hand brake valve. The Power spring expands and the ram assembly moves. The spring brake is applied due to the spring force.

If the service brake is applied under the same condition, both service and parking brake (i.e. spring brake) forces are compounded for braking.

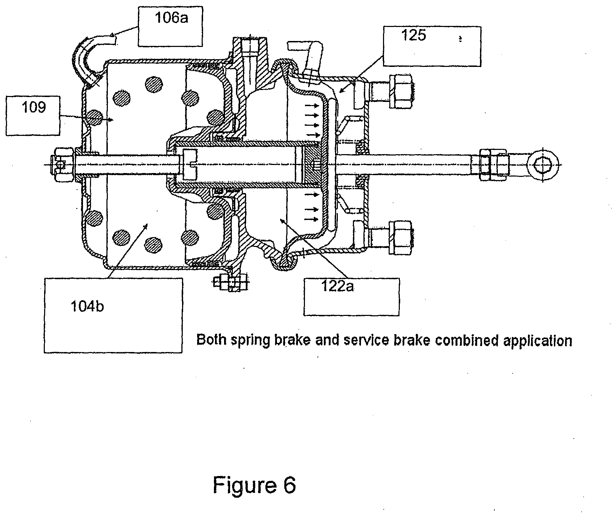

Reference is made to figure 6 for details.

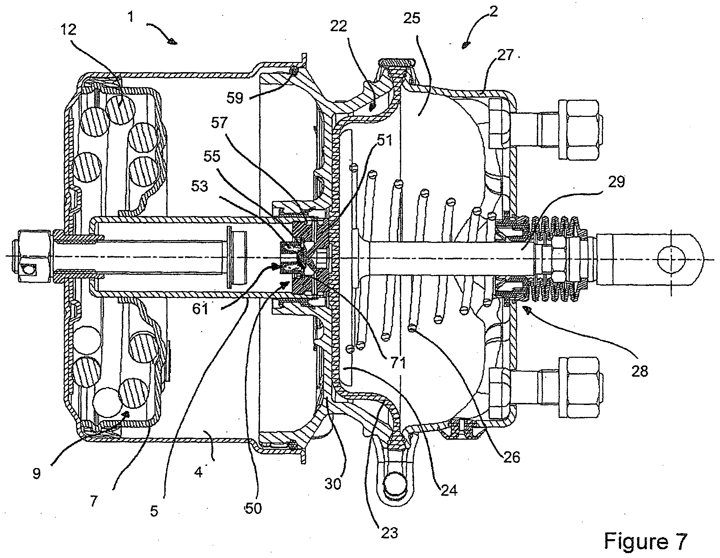

This invention will now be described with reference to the accompanying drawings which illustrate, by way of example, and not by way of limitation, one of possible embodiments of this invention in Figs. 7 to 10.

In the embodiment the spring chamber of the spring brake cylinder is fully sealed with respect to the pressure chamber of the spring brake cylinder. A breather valve is provided in the stem portion of the ram assembly.

Reference is made to Figure 7 for details.

Figure 7 shows a spring brake actuator for a braking system. Incorporated herein is a breather device according to the invention. The breather device comprises a spring brake cylinder 1 and a service brake cylinder 2. Both cylinders are coupled to a housing part 30 and thus structurally combined with each other. Inside the spring brake cylinder 1, a (power) spring 12 is housed in a spring chamber 9. The spring chamber 9 is separated from a pressure chamber 4 inside the brake cylinder by a ram assembly 7. The ram assembly 7 comprises a stem (end) portion 5. In said end portion 5 of said stem, an internal breathing valve 50 is fitted. The valve 50 is fitted coaxially inside the stem portion 5 with respect to the stem portions longitudinal axis X. Axis X is thus also congruent with the rotationally symmetrical axis of said valve 50 when mounted.

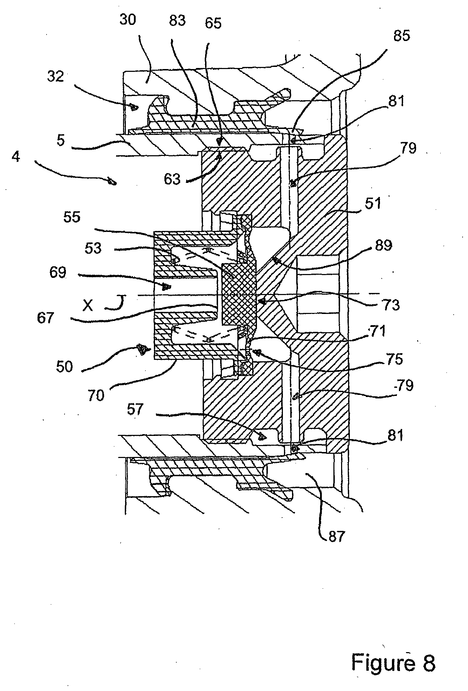

Valve 50 comprises a housing or main body 51 which encompasses a recess 61 holding an elastically deformable member, which in this embodiment is formed as a spring 53. The spring 53 is linked on one end side with the main body 51, and on the other end side with a vented diaphragm 55 such that the diaphragm 55 is pushed away from a valve seat (figure 8). Downstream of the vented diaphragm 55, there are two fluid (second) channels shown which lead substantially radially outward towards the sidewall of stem portion 5. The outer outlets of said fluid channels are surrounded by two sealing elements 57 such that the space between the fluid channel and the stem wall is sealed.

The spring brake cylinder 1 is sealed against the housing part 30 with a sealing element 59.

The service brake cylinder 2 is also sealingly coupled to the housing part 30. The service brake cylinder comprises a membrane 23 and a membrane plate 24 which together act as a piston. The membrane 23 separates a pressure chamber 22 from a spring chamber 2 of the spring chamber 25 of a service brake cylinder 2. The housing part 30 comprises a through-hole 32. By means of said through-hole 32, the interior of the stem portion 5 and the spring chamber 9 are in fluid communication with the pressure chamber 22 of the service brake cylinder. The breathing valve 50 is fitted into the stem portion 5 such that fluid communication between the pressure chamber 22 of the service brake cylinder and the spring chamber 9 can selectively be blocked or enabled.

The spring chamber 25 of the service brake cylinder 2 comprises a spring 26 which acts to axially (with respect to axis X) displace the membrane 23 and membrane plate 24 towards a wall of the housing part 30. The membrane plate 24 is coupled to a piston rod 29 which in turn is led out of the cover 27 of the service brake cylinder 2 in order to be coupled to the braking system, for example to a slack adjuster. The piston rod 29 passes through a sealing element 28 in the cover 27.

This internal breather valve consists of body, vented diaphragm, ring, spring, O-Ring and valve. Normally there will be a gap between the valve seat of Valve and diaphragm due to the spring load such that the valve is normally-open (NO). The vented hole in the diaphragm is connected to the cross holes of body and stem.
Reference is made to Figure 8 for details.

Figure 8 shows a more detailed replacement of the internal breathing valve 50 and the setup of the internal breathing valve according to an advantageous embodiment of the invention. The valve 50 is at least substantially rotationally symmetrical to axis X and is fitted coaxially inside the end of stem portion 5. The main body 51 (or housing) is at least substantially cylindrically shaped and comprises a male thread 63 which is engaging a corresponding female thread 65 inside the stem portion 5. This way, the entire interior cross section of the stem portion 5 can be used for the mechanics of the valve 50, which possibly maximizes fluid through put and minimizes flow resistance. Valve 50 comprises a valve seat 67. Upstream from the valve seat 65, a first fluid passage 69 extends in an axial direction towards the upstream side of valve 50. The valve seat 67 is formed in an insert 70 which is fixed to the main body 51. Between the insert 70 and the main body 51 of the valve 50, the vented diaphragm 55 is mounted. The diaphragm 55 comprises a sealing section which is in the form of a plate and adapted to sealing the engaged valve seat 67. Furthermore, the vented diaphragm comprises a flange like rim 71 which extends substantially radially outward from the sealing section. The elastically deformable member 53 acts against the vented diaphragm 55 and pushes the vented diaphragm 55 into a normally-open (NO) position against a shoulder 73 of the main body 51. One or more venting holes 75 (one shown) are located in and extending through the flange like rim 71. In the normally-open position, a gap between the sealing section of the vented diaphragm 55 and the valve seat 67 remains open, allowing fluid communication between the first fluid passage 69 and the venting hole or venting holes 75.

Downstream from the vented diaphragm, a cavity 77 is formed. The cavity acts as a manifold for one or more second fluid passages 79 (two shown). The cavity 77 leads into (according to figure 8) two second fluid passages 79 which extend radially outward through the main body 51 of the valve 50.

The second fluid passages 79 open out to an outer radial surface of the valve 50. In the position shown in figure 8, the second fluid passages 79 are flush with corresponding through-holes 81 which are formed in the wall of the stem portion 5. On the outside of the stem portion 5, in the region where the valve 50 is fitted into the stem portion 5, a sealing element 83 is arranged. Sealing element 83 acts as a second valve through a sealing lip 85. The sealing lip 85 opens in the downstream direction, when the pressure inside the second fluid passage (and therefore upstream of the breathing valve 50) is greater than outside of the stem portion 5 in a cavity 87. Sealing elements 86, which are located in axially spaced grooves to the left and right side (in figure 8) of the second fluid passages 79 prevent rerouting of fluid into the pressure chamber 4 of the spring brake cylinder 1. If the pressure inside cavity 87 is greater than upstream of the breathing valve, the sealing lip 85 blocks entry of fluid into the breathing valve 50. This situation can for example arise when the pressure chamber 22 of the service brake cylinder 2 is pressurized above atmospheric pressure.

Inside cavity 77, there is provided a conical wall 89, which serves to deflect the fluid flowing through the breathing valve 50 to further reduce flow resistance.

Sealing element 83 is mounted stationary in the through-hole 32 of housing part 30. Thus, when the stem portion 5 is moved to the - in figure 8 - right side, the through-bores 81 and second fluid passages 79 are at some point no longer flush with the sealing lip 85. When that happens, fluid flow in an upstream direction through the second fluid passages, past the vented diaphragm, and past the valve seat 67 into the first fluid passage 69 is enabled, provided that the (dynamic) pressure of the upstream flow does not cause the vented diaphragm to be pushed sealingly against the valve seat 67. This ensures the breathing functions of the valve 50 as long as the pressure in the pressure chamber 22 does not exceed a predetermined value, from which onwards a blocking of the breathing valve is desired in the manner outlined hereinabove.

### Spring brake application:

During application of spring brake, the cross hole is uncovered and the breather is in open condition. Due to the movement of ram there will be vacuum creation in the spring chamber. Air flows from the service port to the spring chamber through the internal breather valve.

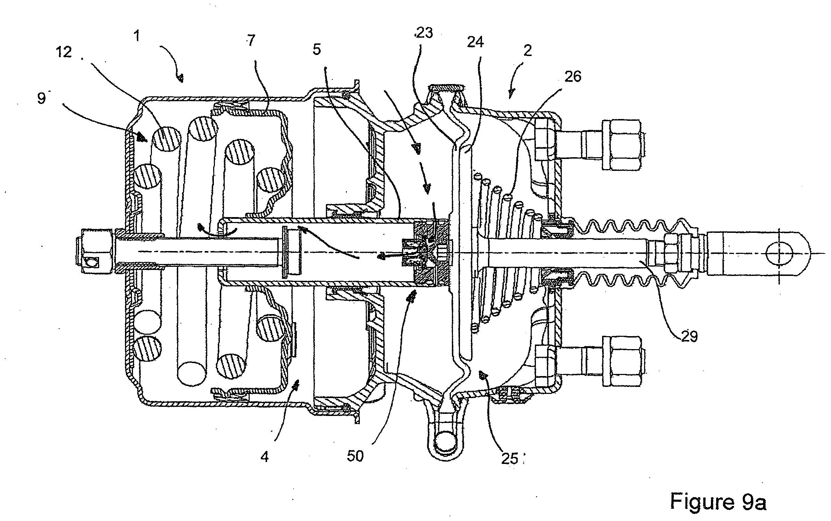

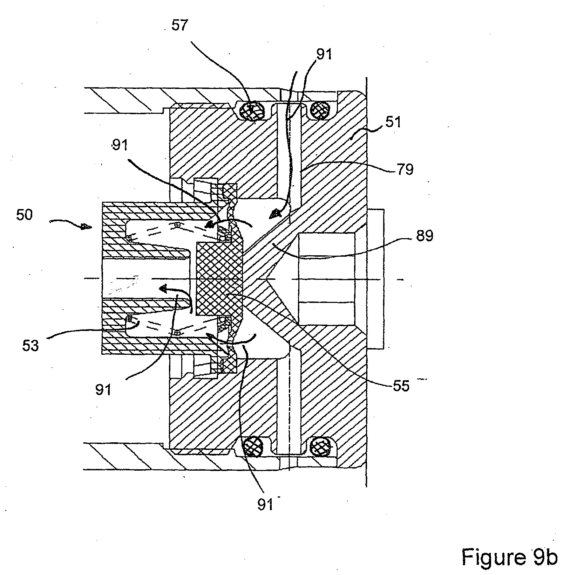

Reference is made to Figure 9 for details.

Figure 9a schematically shows the flow of fluid in an upstream direction through the breathing valve 50. Fluid pressure in the spring chamber 4 is released, for example through an external valve. As a consequence of the decreasing pressure inside pressure chamber 4, the spring 12 inside the spring chamber 9 of the spring brake cylinder 1 expands and displaces the ram assembly 7 along with stem portion 5 towards the service brake actuator constituted by membrane 23 and membrane plate 24. Hereby, spring 26 inside spring chamber 25 of the service brake cylinder 2 is compressed, and the piston rod 29 is moved in the same direction as the ram assembly 7. The pressure chamber 22 of the service brake cylinder 2 is open to atmospheric pressure, which allows air to flow through the pressure chamber 22, into valve 50 in an upstream direction, because the vented diaphragm is held open by the elastically deformable membrane 53 (see figure 8). Vacuum which might eventually have built up inside the spring chamber 9 is compensated for by the entering fluid. This is also shown in detail in figure 9b.

Figure 9b shows the fluid streaming upstream indicated by arrows 91. The air streaming through the breathing valve 50 is deflected after passing the second fluid passages 79 by the conical wall 89 towards the vented diaphragm 55. The details shown in figure 9b are identical to those already shown in figure 8 which is why it is referred to the respective passage hereinabove.

### Spring brake release:

During releasing of spring brake, air pressure is supplied to the spring brake cylinder. The ram assembly moves inwards and there is a reduction of volume at the spring chamber. There will be a pressure build-up at the spring chamber. Air flows from the spring chamber to the service port through the internal breather valve.

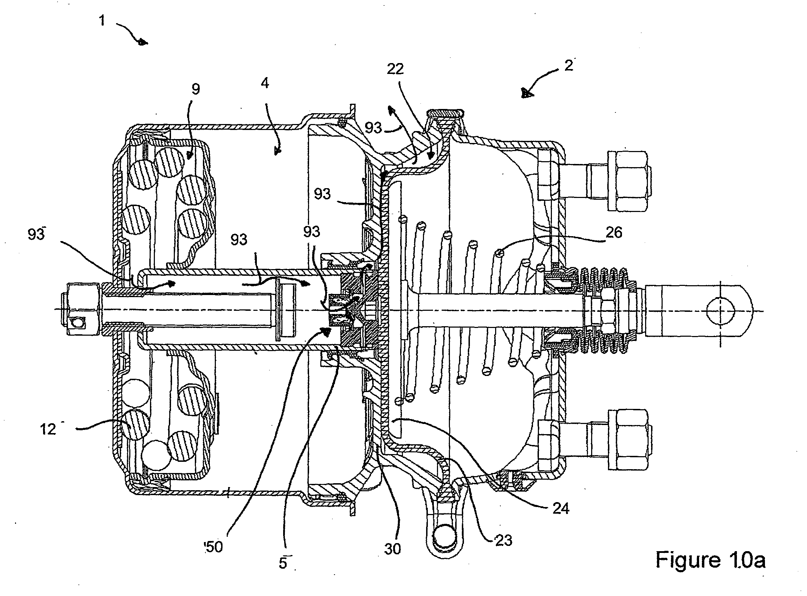

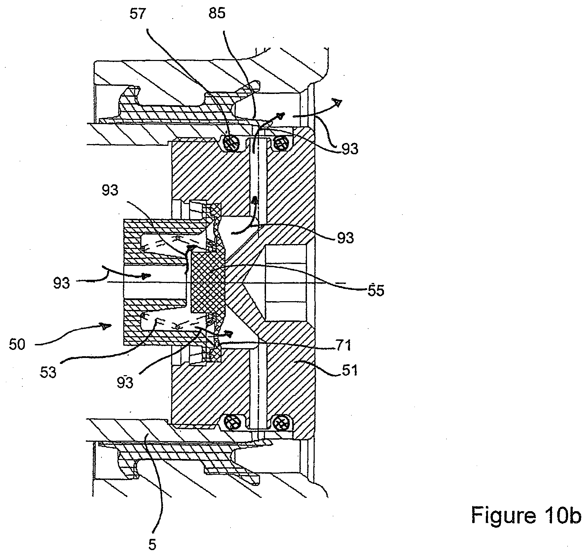

Reference is made to Figure 10 for details.

Figure 10a shows schematically the spring brake release operation of the building device according to the invention. The pressure chamber 4 is being or has been pressurized with sufficient pressure to displace the spring 12 within spring chamber 9 into a compressed state. Accordingly, the ram assembly 7 and the stem portion 5 have been moved into the most inward, released position. In this position, pressure which has been built up due to the compression inside the spring chamber 9 is compensated by fluid streaming in the direction of arrows 93 through the breathing valve 50 into the pressure chamber 22 of the service brake cylinder 2 and from there out into the atmosphere. The actuator 23, 24 of the service brake cylinder 2 has been moved to the leftmost position through the action of spring 26. The membrane 23 lies against a corresponding wall section of housing part 30. Fluid transport is however still enabled from the breathing valve 50 downstream towards the pressure chamber 22, because there is a higher pressure inside the spring chamber than in the pressure chamber 22 of the service brake cylinder 2. Because of that, as can be understood from figure 10b, the sealing lip 85 is being pushed away from its seat against the stem surface by the air streaming out of the second fluid passages, thus allowing pressure compensation. Otherwise, the structural set up of the breathing valve 50 inside the stem portion 5 shown in figure 10b corresponds to the set up shown in figures 8 and 9b, which is why it is referred to the above passages.

### List of reference numerals

- 1: spring brake cylinder
- 2: service brake cylinder
- 4: pressure chamber
- 5: stem portion
- 7: ram assembly
- 9: spring chamber
- 12: spring
- 22: pressure chamber
- 23: membrane
- 24: membrane plate
- 25: spring chamber
- 26: spring
- 27: cover
- 28: sealing element
- 29: piston rod
- 30: housing part
- 32: through-hole
- 50: breathing valve
- 51: main body
- 53: spring
- 55: vented diaphragm
- 57: sealing element
- 59: sealing element
- 61: recess
- 63: male thread
- 65: female thread
- 67: valve seat
- 69: fluid channel
- 70: insert
- 71: rim
- 73: shoulder
- 75: venting hole
- 77: cavity
- 79: (second) fluid channel
- 81: through-bore
- 83: sealing element
- 85: sealing lip
- 86: sealing element
- 87: cavity
- 89: tapered wall
- 91: arrow
- 93: arrow
- 104: spring chamber
- 104a: spring chamber - air pressure supplied through the hand brake valve
- 104b: air pressure in spring chamber is exhausted through the hand brake valve
- 104c: air pressure is supplied to the spring chamber through the hand brake valve
- 106: external breather tube
- 106a: breather tube
- 107: ram assembly
- 109: spring room
- 110: air flow
- 110a: airflow
- 111: air with dust flows through the breather tube and mud water entry through the tube
- 112: power spring
- 113: vacuum creation
- 114: seal
- 116: drain hole in the non-pressure side
- 122: diaphragm chamber
- 122a: service chamber
- 125: non-pressure side

## Claims

1. An internal breather valve for a spring brake actuator used in the air brake system of a motor vehicle,
said breather valve being fitted to the stem portion of the ram assembly of the actuator, and comprising a normally-open vented diaphragm for sealing the valve and blocking the air passage from a pressure chamber of a service brake cylinder to a spring chamber of a spring brake cylinder, the spring chamber being connected to the service port of the service brake assembly such that during application of the spring brake, a ram assembly moves outwards and atmospheric air from the service port flows through the internal breather valve to the spring chamber and causes any vacuum formed to collapse; and such that
during release of the spring brake, pressurized air flows from the spring chamber to the service port through the internal breather valve, thus avoiding pressure build up inside the spring chamber,
the simultaneous application of spring brake and service brake, however, causing the air pressure applied to the service brake to enter the breather assembly, enabling the diaphragm to seal the valve and thus block the air passage from the pressure chamber of the service brake cylinder to the spring chamber, said internal breather valve (50) comprising:
- a main body (51) adapted to fit into the end portion (5) of a stem of the spring brake actuator,
- a fluid channel formed in and extending through the main body,
- a valve seat (67) formed in the main body and communicating with the fluid channel,
- a vented diaphragm (55) which is movably mounted inside the main body and adapted to sealingly engage the valve seat, and
- an elastically deformable member (53) linking the diaphragm and the main body such that the vented diaphragm is held in a normally-open position,
wherein the vented diaphragm comprises one or a plurality of venting holes (75) which are connected to the fluid channel provided in the main body when the vented diaphragm is in the open position.

2. The valve according to claim 1,
wherein a diameter of the venting hole or venting holes (75) and the rigidity of the elastically deformable member (53) are adapted with respect to each other such that the vented diaphragm (55) is held in the open position as long as the fluid pressure on a side of the vented diaphragm (55) facing away from the valve seat (67) is approximately equal to atmospheric pressure or lower.

3. The valve according to claim 1 or 2,
wherein the diameter of the venting hole or venting holes (75) and the rigidity of the elastically deformable member (53) are adapted with respect to each other such that the vented diaphragm (55) is moved into a closed position, sealing the valve seat (67), when the fluid pressure on the side of the vented diaphragm (55) facing away from the valve seat (67) reaches or exceeds a predetermined positive pressure.

4. The valve according to claim 3,
wherein the value of the predetermined positive pressure lies in the range of 1.3 bar or higher, preferably 1.5 bar or higher.

5. The valve according to one of the preceding claims,
wherein the fluid channel comprises at least one first fluid passage (69) on the side of the vented diaphragm facing the valve seat, and at least one, preferably two or more, second fluid passages (79) on the side of the vented diaphragm facing away from the valve seat.

6. The valve according to claim 5,
wherein the at least one second fluid passage (79) is oriented substantially radially, and the at least one first fluid passage (69) preferably is oriented axially, each with respect to a rotationally symmetrical axis of the main body (51).

7. The valve according to claims 5 or 6,
wherein the fluid channel comprises a tapered section adapted to deflecting fluid passing from the first fluid passage towards the second fluid passage and vice versa.

8. The valve according to claim 7,
wherein the tapered section comprises a cavity (77) having a conical wall (89), and wherein the at least one second fluid passage (79) leads into said cavity (77).

9. The valve according to one of claims 5 to 8,
wherein the at least one second fluid passage opens out to an outer radial surface of the main body (51).

10. The valve according to one of claims 5 to 9,
wherein the radial outer surface of the main body (51) comprises two or more annular grooves which are axially spaced apart on both axial sides of the at least one second fluid passage.

11. The valve according to one of the preceding claims,
wherein the elastically deformable member (53) is a spring being located in a recess of the main body (51) and acting to axially displace the vented diaphragm (55) away from the valve seat (67).

12. The valve according to one of the preceding claims,
wherein the main body (51) comprises a, preferably male, threaded section adapted to mating with a corresponding, preferably female, threaded section of the stem of the spring brake actuator.

13. An internal breather device for a spring brake actuator used in the air brake system of a motor vehicle, comprising a valve according to one of claims 1 to 12.

14. A spring brake, comprising a spring brake cylinder (1) and a service brake cylinder (2) combined therewith, wherein
- the spring brake cylinder (1) comprises a spring brake actuator, said actuator comprising a ram assembly (7) movable by a spring (12) accommodated in a spring chamber (9) and by pressurization of a pressure chamber (4);
- the service brake cylinder (2) comprises an actuator (23,24) movable by pressurization of a pressure chamber (22); and a service port for supply and withdrawal of process fluid into the pressure chamber (22),
- the ram assembly (7) of. the spring brake cylinder (1) comprises a stem portion (5) which communicates with the service brake actuator (23, 24);
**characterized in that** a breather valve (50) according to one of claims 1 to 12 is fitted into the stem portion (5) of the ram assembly (7).

15. The spring brake of claim 14, wherein the ram assembly (7) divides the spring brake cylinder (1) into a pressure chamber (4) and a spring chamber (9) accommodating the spring (12).

16. The spring brake according to one of claims 14 to 15,
wherein the stem portion (5) extends through a through-hole (32) in a wall (30) which separates the pressure chamber (4) of the spring brake cylinder (1) from the pressure chamber (22) of the service brake cylinder (2), in the direction of the pressure chamber (22) of the service brake cylinder (2).

17. The spring brake according to one of claims 14 to 16,
wherein the service brake actuator (23,24) is movable by a spring (26) accommodated in a spring chamber (25) of the service brake cylinder (2).

18. The spring brake according to one of claims 14 to 17,
wherein the breather valve (50) is a first valve, and the spring brake further comprises a second valve, said second valve being a check valve adapted to allow passage of fluid from the breather valve into the pressure chamber of the service brake cylinder.

19. The spring brake according to one of claims 14 to 18,
wherein the second valve is a radial lip seal (85) and adapted to sealingly close the fluid channel of the breather valve (50) against fluid passage from the pressure chamber (22) of the service brake cylinder (2) towards the spring chamber (9) when the stem portion (5) is in a released position.

## Patentansprüche

1. Ein internes Atmungsventil für einen Federbremsaktuator, verwendet in einem Luft-Bremssystem eines Motor-Fahrzeugs,
wobei das genannte Atmungsventil an dem Schaft-Bereich der Kolben-Baugruppe des Aktuators angebracht ist, und
aufweisend eine normal-offene Lüftungs-Membran, zum Dichten des Ventils und blockieren des Luftdurchgangs von einer Druckkammer eines Betriebs-Bremszylinders zu einer Federkammer eines Federbremszylinders, wobei die Federkammer mit dem Service-Anschluss der Betriebsbrems-Baugruppe derart verbunden ist, dass sich während Betätigung der Federbremse eine Kolben-Baugruppe nach außen bewegt, und atmosphärische Luft von dem Service-Anschluss durch das Atmungsventil zur Federkammer fließt und veranlasst, jegliches gebildetes Vakuum zusammenzubrechen, und
derart, dass bei Freigabe der Federbremse Druckluft von der Federkammer durch das interne Atmungsventil zum Service-Anschluss fließt, daher ein innerhalb der Federkammer gebildeter Überdruck vermieden wird, wobei
die simultane Betätigung der Federbremse und der Betriebsbremse dennoch dazu führt, dass die Druckluft, die auf die Betriebsbremse wirkt, veranlasst wird in die Atmungsventil-Baugruppe einzutreten und es der Membran zu ermöglichen, das Ventil abzudichten, und daher einen Luftdurchgang von der Druckkammer des Betriebs-Bremszylinders zu der Federkammer zu blockieren, wobei das genannte interne Atmungsventil (50) aufweist:
- einen Hauptkörper (51) angepasst, in den Endbereich (5) des Schafts des Federbremsaktuators zu passen,
- einen Fluidkanal, der in dem Hauptkörper gebildet ist und sich durch den Hauptkörper erstreckt,
- einen Ventilsitz (67), gebildet in dem Hauptkörper und kommunizierend mit dem Fluidkanal,
- eine Lüftungs-Membran (55), welche innerhalb des Hauptkörpers beweglich eingebaut und angepasst ist, abdichtend in den Ventilsitz einzuliegen, und
- ein elastisch verformbares Teil (53), welches die Membran und den Hauptkörper derart koppelt, dass die Lüftungs-Membran in einer normal-offenen Position gehalten wird, wobei die Entlüftungs-Membran weiterhin mindestens ein oder eine Vielzahl an Lüftungslöchern (75) aufweist, welche mit dem in dem Hauptkörper bereitgestellten Fluidkanal verbunden sind, sofern sich die Lüftungs-Membran in der offenen Position befindet.

2. Das Ventil nach Anspruch 1,
wobei der Durchmesser des Lüftungslochs oder der Lüftungslöcher (75) und die Steifigkeit des elastisch verformbaren Teils (53) gegenseitig derart angepasst ist, dass die Lüftungs-Membran (55) in geöffneter Position gehalten wird, solange der Fluiddruck auf der Seite der Lüftungs-Membran (55), die dem Ventilsitz (67) abgewandt ist, ungefähr gleich dem atmosphärischen Druck oder niedriger ist.

3. Das Ventil nach Anspruch 1 oder 2,
wobei der Durchmesser des Lüftungslochs oder der Lüftungslöcher (75) und die Steifigkeit des elastisch verformbaren Teils (53) gegenseitig derart angepasst ist, dass die Lüftungs-Membran (55) in eine geschlossene Position übergeht, welche den Ventilsitz (67) abdichtet, wenn der Fluiddruck auf der Seite der Lüftungs-Membran (55), die dem Ventilsitz (67) abgewandt ist, einen vorbestimmten positiven Druck erreicht oder übersteigt.

4. Das Ventil nach Anspruch 3,
wobei der Wert des vorbestimmten positiven Drucks in dem Bereich zwischen 1,3 bar oder höher, vorzugsweise 1,5 bar oder höher liegt.

5. Das Ventil nach einer der vorausgegangenen Ansprüche,
wobei der Fluidkanal mindestens einen ersten Fluiddurchgang (69) auf der dem Ventilsitz zugewandten Seite der Lüftungs-Membran aufweist und mindestens einen, vorzugsweise zwei oder mehr, zweiten Fluiddurchgänge (79) auf der dem Ventilsitz abgewandten Seite.

6. Das Ventil nach Anspruch 5,
wobei der mindestens eine zweite Fluiddurchgang (79) im Wesentlichen in radialer Richtung orientiert ist, und der mindestens eine erste Fluiddurchgang (69) vorzugsweise in axialer Richtung orientiert ist, jeder relativ zu der Rotationssymmetrieachse des Hauptkörpers (51).

7. Das Ventil nach Anspruch 5 oder 6,
wobei der Fluidkanal einen sich verjüngenden Abschnitt aufweist, derart angepasst, dass Fluid abgelenkt wird, welches vom ersten Fluiddurchgang dem zweiten Fluiddurchgang zuströmt und umgekehrt.

8. Das Ventil nach Anspruch 7,
wobei der sich verjüngende Abschnitt einen Hohlraum (77) aufweist, welcher eine konische Wand (89) hat, und wobei der mindestens eine zweite Fluiddurchgang (79) in den genannten Hohlraum (77) führt.

9. Das Ventil nach einer der Ansprüche 5 bis 8,
wobei sich der mindestens eine zweite Fluiddurchgang zu einer äußeren, radialen Oberfläche des Hauptkörpers (51) öffnet.

10. Das Ventil nach einer der Ansprüche 5 bis 9,
wobei die äußere, radiale Oberfläche des Hauptkörpers (51) zwei oder mehr ringförmige Nuten aufweist, welche auf beiden axialen Seiten des mindestens einen zweiten Fluiddurchgangs axial versetzt beabstandet sind.

11. Das Ventil nach einer der vorausgegangenen Ansprüche,
wobei das elastisch verformbare Teil (53) eine Feder ist, lokalisiert in einer Aussparung des Hauptkörpers (51), und ein axiales Verschieben der Lüftungs-Membran (55) weg von dem Ventilsitz (67) bewirkt.

12. Das Ventil nach einer der vorausgegangenen Ansprüche,
wobei der Hauptkörper (51) einen bevorzugt männlichen Gewindeabschnitt aufweist, derart ausgebildet, dass er mit einem korrespondierenden, bevorzugt weiblichen Gewindeabschnitt des Schafts des Federbremsaktuators zusammenpasst.

13. Eine interne Atmungs-Vorrichtung für einen Federbremsaktuator, verwendet in einem Luft-Bremssystem eines Motor-Fahrzeugs, aufweisend ein Ventil nach einem der Ansprüche 1 bis 12.

14. Eine Federbremse, aufweisend einen Federbremszylinder (1) und kombiniert damit ein Betriebs-Bremszylinder (2), wobei
- der Federbremszylinder (1), einen Federbremsaktuator aufweist, wobei der genannte Aktuator eine Kolben-Baugruppe (7) aufweist, und diese beweglich ist mittels einer Feder (12), untergebracht in einer Federkammer (9), und unter Druckbeaufschlagung einer Druckkammer (4);
- der Betriebs-Bremszylinder (2) einen Aktuator (23,24) aufweist, der beweglich ist mittels Druckbeaufschlagung einer Druckkammer (22); und einen Service-Anschluss zur Versorgung und Entnahme eines Arbeitsfluids in eine Druckkammer (22),
- die Kolben-Baugruppe (7) des Federbremszylinders (1) einen Schaft-Bereich (5) aufweist, welcher mit dem Betriebs-Bremsaktuator (23,24) kommuniziert;
**dadurch gekennzeichnet, dass** ein Atmungsventil (50) nach einem der Ansprüche 1 bis 12 in den Schaft-Bereich (5) der Kolben-Baugruppe (7) eingebracht ist.

15. Die Federbremse nach Anspruch 14, wobei die Kolben-Baugruppe (7) den Federbremszylinder (1) in eine Druckkammer (4) und eine Federkammer (9) unterteilt, welche die Feder (12) aufnimmt.

16. Die Federbremse nach einem der Ansprüche 14 und 15,
wobei sich der Schaft-Bereich (5) durch eine Durchgangsbohrung (32) in einer Wand (30), welche die Druckkammer (4) des Federbremszylinders (1) von der Druckkammer (22) des Betriebs-Bremszylinders (2) separiert, in die Richtung der Druckkammer (22) des Betriebs-Bremszylinders (2) erstreckt.

17. Die Federbremse nach einem der Ansprüche 14 bis 16,
wobei der Betriebs-Bremsaktuator (23,24) mittels einer Feder (26) beweglich ist, welche in der Federkammer (25) des Betriebs-Bremszylinders (2) untergebracht ist.

18. Die Federbremse nach einem der Ansprüche 14 bis 17,
wobei das Atmungsventil (50) ein erstes Ventil ist, und die Federbremse weiterhin ein zweites Ventil aufweist, und das genannte zweite Ventil ein Rückschlagventil ist, derart angepasst, dass Fluid vom Atmungsventil in die Druckkammer des Betriebs-Bremszylinders durchgehen kann.

19. Die Federbremse nach einer der Ansprüche 14 bis 18,
wobei das zweite Ventil eine radiale Lippendichtung (85) ist, derart ausgebildet, dass der Fluidkanal des Atmungsventils (50) dichtend geschlossen wird gegenüber Fluiddurchgang von der Druckkammer (22) des Betriebs-Bremszylinders (2) in Richtung der Federkammer (9), wenn sich der Schaft-Bereich (5) in einer frei gegebenen Position befindet.

## Revendications

1. Reniflard intérieur pour un actionneur de frein à ressort, utilisé dans le système de frein pneumatique d'un véhicule à moteur,
le reniflard étant adapté à la partie de tige de l'ensemble d'admission de l'actionneur et comprenant un diaphragme à évent ouvert normalement pour obturer le reniflard et empêcher le passage de l'air d'une chambre sous pression d'un cylindre de frein de service à une chambre à ressort d'un cylindre de frein à ressort, la chambre à ressort communiquant avec l'orifice de service de l'ensemble de frein de service, de manière à ce que, pendant l'application du frein à ressort, un ensemble d'admission se déplace vers l'extérieur et de l'air atmosphérique passe par le reniflard intérieur de l'orifice de service à la chambre à ressort et fait s'effondrer tout vide formé et tel que
pendant que le frein à ressort est desserré, de l'air sous pression passe par le reniflard intérieur de la chambre à ressort à l'orifice de service, en empêchant ainsi qu'une pression s'accumule à l'intérieur de la chambre à ressort, tandis que l'application simultanée du frein à ressort et du frein de service fait que la pression de l'air appliquée au frein de service entre dans l'ensemble de reniflard, en permettant au diaphragme d'obturer le reniflard et d'empêcher ainsi le passage de l'air de la chambre sous pression du cylindre de frein de service à la chambre à ressort, le reniflard (50) intérieur comprenant :
- un corps (51) principal propre à s'adapter dans la partie (5) d'extrémité d'une tige de l'actionneur du frein à ressort,
- un conduit pour du fluide formé et s'étendant dans le corps principal,
- un siège (67) de reniflard formé dans le corps principal et communiquant avec le canal pour du fluide,
- un diaphragme (55) à évent, qui est monté mobile à l'intérieur du corps principal et qui est propre à coopérer avec étanchéité avec le siège du reniflard et
- un élément (53) déformable élastiquement, reliant le diaphragme et le corps principal de manière à maintenir le diaphragme à évent dans une position ouverte normalement,
dans lequel le diaphragme à évent comporte un ou plusieurs évents (75), qui communiquent avec le conduit pour du fluide prévu dans le corps principal lorsque le diaphragme a évent est dans la position ouverte.

2. Reniflard suivant la revendication 1,
dans lequel un diamètre de l'évent ou des évents (75) et la rigidité de l'élément (53) déformable élastiquement sont adaptés l'un à l'autre, de manière à maintenir le diaphragme (55) à évent dans la position ouverte tant que la pression du fluide, du côté du diaphragme (55) à évent éloigné du siège (67) du reniflard, est à peu près égale à la pression atmosphérique ou lui est inférieure.

3. Reniflard suivant la revendication 1 ou 2,
dans lequel le diamètre de l'évent ou des évents (75) et la rigidité de l'élément (53) déformable élastiquement sont adaptés l'un à l'autre, de manière à mettre le diaphragme (55) à évent dans une position fermée, rendant étanche le siège (67) du reniflard, lorsque la pression du fluide, du côté du diaphragme (55) à évent éloigné du siège (67) du reniflard, atteint ou dépasse une pression positive déterminée à l'avance.

4. Reniflard suivant la revendication 3,
dans lequel la valeur de la pression positive déterminée à l'avance est dans la plage de 1,3 bar ou plus haute, de préférence de 1,5 bar ou plus haute.

5. Reniflard suivant l'une des revendications précédentes,
dans lequel le conduit pour du fluide comprend au moins un premier passage (69) pour du fluide, du côté du diaphragme à évent faisant face au siège du reniflard et au moins un, de préférence deux ou plusieurs deuxièmes passages (79) pour du fluide, du côté du diaphragme à évent éloigné du siège du reniflard.

6. Reniflard suivant la revendication 5,
dans lequel le au moins un deuxième passage (79) pour du fluide est orienté sensiblement radialement et le au moins un premier passage (69) pour du fluide est orienté de préférence axialement, chacun par rapport à un axe de révolution du corps (51) principal.

7. Reniflard suivant la revendication 5 ou 6,
dans lequel le conduit pour du fluide comprend un tronçon rétréci propre à dévier du fluide passant du premier passage pour du fluide au deuxième passage pour du fluide et vice versa.

8. Reniflard suivant la revendication 7,
dans lequel le tronçon rétréci comprend une cavité (77) ayant une paroi (89) conique et dans lequel le au moins un deuxième passage (79) pour du fluide débouche dans la cavité (77).

9. Reniflard suivant l'une des revendications 5 à 8,
dans lequel le au moins un deuxième passage pour du fluide débouche sur une surface extérieure radiale du corps (51) principal.

10. Reniflard suivant l'une des revendications 5 à 9,
dans lequel la surface extérieure radiale du corps (51) principal comprend deux ou plusieurs rainures annulaires, qui sont à distance axialement des deux côtés axiaux du au moins un deuxième passage pour du fluide.

11. Reniflard suivant l'une des revendications précédentes,
dans lequel l'élément (53) déformable élastiquement est un ressort placé dans un creux du corps (51) principal et agissant de manière à éloigner axialement le diaphragme (55) à évent du siège (67) du reniflard.

12. Reniflard suivant l'une des revendications précédentes,
dans lequel le corps (51) principal comprend une partie filetée, de préférence mâle, propre à s'adapter à une partie filetée correspondante, de préférence femelle, de la tige de l'actionneur du frein à ressort.

13. Dispositif de reniflard intérieur pour un actionneur de frein à ressort utilisé dans le système de frein pneumatique d'un véhicule à moteur, comprenant un reniflard suivant l'une des revendications 1 à 12.

14. Frein à ressort, comprenant un cylindre (1) de frein à ressort et un cylindre (2) de frein de service, qui lui est combiné, dans lequel
- le cylindre (1) de frein à ressort comprend un actionneur de frein à ressort, l'actionneur comprenant un ensemble (7) d'admission, mobile par un ressort (12) logé dans une chambre (9) à ressort et par une mise sous pression d'une chambre (4) sous pression;
- le cylindre (2) de frein de service comprend un actionneur (23, 24) mobile par mise sous pression d'une chambre (22) sous pression et un orifice de service pour envoyer du fluide de processus dans la chambre (22) sous pression et en retirer,
- l'ensemble (7) d'admission du cylindre (1) de frein à ressort comprend une partie (5) de tige, qui communique avec l'actionneur (23, 24) de frein de service;
**caractérisé en ce qu'**un reniflard (50), suivant l'une des revendications 1 à 12, est adapté dans la partie (5) de tige de l'ensemble (7) d'admission.

15. Frein à ressort suivant la revendication 14,
dans lequel l'ensemble (7) d'admission subdivise le cylindre (1) de frein à ressort en une chambre (4) sous pression et en une chambre (9) à ressort logeant le ressort (12).

16. Frein à ressort suivant l'une des revendications 14 à 15,
dans lequel la partie (5) de tige passe dans un trou (32) traversant d'une paroi (30), qui sépare la chambre (4) sous pression du cylindre (1) de frein à ressort de la chambre (22) sous pression du cylindre (2) de frein de service, dans la direction de la chambre (22) sous pression du cylindre (2) de frein de service.

17. Frein à ressort suivant l'une des revendications 14 à 16,
dans lequel l'actionneur (23, 24) de frein de service est mobile par un ressort (26) logé dans une chambre (25) à ressort du cylindre (2) de frein de service.

18. Frein à ressort suivant l'une des revendications 14 à 17,
dans lequel le reniflard (50) est un premier reniflard et le frein à ressort comprend, en outre, une deuxième soupape, la deuxième soupape étant une soupape de retenue propre à permettre le passage du fluide du reniflard à la chambre sous pression du cylindre de frein de service.

19. Frein à ressort suivant l'une des revendications 14 à 18,
dans lequel la deuxième soupape est un joint (85) à lèvre radiale et est propre à fermer de manière étanche le conduit pour du fluide du reniflard (50) en empêchant un passage du fluide de la chambre (22) sous pression du cylindre (2) de frein de service à la chambre (9) à ressort lorsque la partie (5) de tige est dans une position relâchée.
